# EUROPEAN PATENT SPECIFICATION

(11) **EP 1 799 738 B1**
(45) Date of publication and mention of the grant of the patent: **03.05.2017**
(21) Application number: 05812179.9
(22) Date of filing: 11.10.2005
(51) Int. Cl.: C08G 18/48, C08G 18/76, C09J 175/08, C08G 18/12

(54) **LOW VOLATILE ISOCYANATE MONOMER CONTAINING POLYURETHANE PREPOLYMER AND ADHESIVE SYSTEM**
POLYURETHANPRÄPOLYMER ENTHALTEND WENIG FLÜCHTIGES ISOCYANATMONOMER UND HAFTSYSTEM
PREPOLYMERE DE POLYURETHANNE AYANT UNE TRÈS FAIBLE TENEUR EN MONOMERE D'ISOCYANATE VOLATIL ET SYSTEME ADHESIF

(30) Priority: 08.10.2004 US 961643
(43) Date of publication of application: 27.06.2007
(73) Proprietor: Dow Global Technologies LLC, Midland, MI 48674 (US)
(72) Inventor: ZHU, Huide, D., Rochester, MI 48307 (US); KNEISEL, Andrew, R., Clarkston, MI 48348 (US); MAHDI, Syed, Z., Rochester Hills, MI 48307 (US); SARACSAN, Jeffrey, W., Waterford, MI 48328 (US)
(74) Representative: Beck Greener
(86) International application number: PCT/US2005/036831
(87) International publication number: WO 2006/042305

(56) References cited:
- EP-A- 0 965 604
- US-A- 3 391 101
- US-A- 3 933 725
- US-A- 5 922 809
- US-A- 6 015 475
- US-A1- 2003 144 412

## Description

### Field of Invention

This application relates to polyurethane based prepolymers containing a low amount of volatile isocyanate monomer. This application also relates to adhesive compositions and adhesive systems which are based on the polyurethane prepolymers and which contain a low amount of volatile isocyanate monomers. In yet another embodiment, the invention relates to primer and adhesive systems which contain a low concentration volatile isocyanate monomers. In another embodiment, the invention relates to a method of bonding substrates together using such adhesives and adhesive systems.

### Background of Invention

Polyurethane prepolymers are used in a wide variety of industrial uses. Many of the systems are prepared from isocyanate systems which contain volatile isocyanate monomers, such as diphenylmethane diisocyanate (MDI). Such uses include foams, adhesives, underbody coatings, automobile dampening systems, elastomeric parts and articles. There is concern in industrial environments that exposure to volatile isocyanate monomers may be harmful to workers' health. Therefore, there is a need to reduce the concentration of volatile isocyanate monomers in polyurethane precursors and prepolymers used in a variety of industrial applications. One solution known in the art is to strip the volatile isocyanate monomers from prepolymer systems using a distillation technique, such as a wipe-film evaporator. See, Anderson et al., U.S. Patent 5,441,808 at col. 6, lines 29-34. This solution adds an extra unit operation and therefore adds capital costs and operating costs to the production of such prepolymers.

Another solution known in the art involves preparing prepolymers in a two-step process wherein in the first step polyhydric alcohols are reacted with an asymmetric isocyanate having isocyanate groups of differing reactivity. The polyols preferentially react with the more reactive isocyanate group. The process is allowed to continue until a theoretical amount of the faster reacting isocyanates has reacted with polyhydric alcohols. Thereafter, the reaction product is reacted with an even faster reacting symmetric isocyanate to prepare the prepolymer. This two-step process also requires an additional unit operation. The extra step and extra capital required to handle a second isocyanate adds significant costs to this process. See, Bolte et al., U.S. Patent 6,515,164 and Bauriedel, U.S. Patent 4,623,709, incorporated herein by reference. This process requires very careful processing conditions and due to the limitations on the chain growth provides lower flexibility relative to target viscosity of a particular prepolymer and prevents one skilled in the art from tailoring a prepolymer to meet certain property targets.

What is needed are polyurethane prepolymers which contain low concentrations of volatile isocyanate monomers wherein the prepolymers can be prepared from standard commercially available isocyanate monomer systems using conventional process techniques. What is also needed are adhesives compositions and systems which contain such prepolymers. Furthermore, what is needed are such prepolymers which can be prepared without the need for additional separate unit operations or complex process steps.

### Summary of Invention

In one aspect the invention is a composition comprising a prepolymer which is the reaction product of one or more monomeric di(isocyanatophenyl)methanes with a mixture of one or more diols and one or more triols and a low molecular weight isocyanate reactive compound wherein the ratio of isocyanate equivalents to hydroxyl equivalents in the reaction mixture used to prepare the prepolymer is from 1.2 to 1.7 and the hydroxyl ratio of diol to triol in the reaction mixture is from 3:1 to 1:1 and wherein the prepolymer has an isocyanate content of about 0.5 to 1.2 percent by weight, a free isocyanate monomer content of about 1.0 percent by weight or less as measured by high pressure liquid chromatography.

In another embodiment, the invention is a composition comprising a prepolymer as described hereinbefore and a catalyst for the reaction of isocyanate with an active hydrogen-containing compound, wherein the composition is useful as an adhesive.

In yet another embodiment, the invention is a method of bonding two or more substrates together which comprises applying an adhesive as described herein to at least one substrate, contacting the two or more substrates together with the adhesive disposed between the substrates and exposing the contacted substrates and adhesive to conditions under which the adhesive cures.

In yet another embodiment, the invention comprises a system for bonding two or more substrates together which comprises an isocyanate free primer and an adhesive composition as described hereinbefore.

The prepolymers of the invention are useful in many standard polyurethane uses, such as adhesives, sealers, coating compositions, sound dampening compositions. The prepolymers demonstrate low volatile isocyanate monomer concentrations. Preferably, the prepolymers contain 0.7 percent by weight or less of volatile isocyanate monomers, more preferably 0.5 percent by weight or less and most preferably between 0.2 and 0.4 weight percent. Such weight percents are determined according to high pressure liquid chromatograph-mass spectroscopy (HPLC-MS) techniques such as described in the following tests. Monomeric isocyanate in the samples is first reacted with methanol (dried with molecular sieves) to form carbamate derivative which is then quantified by HPLC-MS using a Waters Alliance 2690 ternary gradient liquid chromatograph coupled to a Waters ZMD, SN LB188, quadrupole MS system, via Micromass Z-spray electrospray (ESI) interface operating or in the PI and NI modes. Both standards and samples are analyzed in duplicates. Mass spectrum is used for confirmation. Such prepolymers can be prepared using conventional equipment and process techniques. Furthermore, the use of such prepolymers in polyurethane systems such as adhesive systems and primer and adhesive systems result in a significantly lower potential exposure of workers in a workplace to volatile isocyanate monomers.

### Detailed Description of Invention

Prepolymers of the invention can be prepared using conventional processing techniques wherein isocyanates are reacted with a mixture of one or more diols and one or more triols in the presence of a standard polyurethane catalyst. Preferably, the polyurethane prepolymer may be prepared by bulk polymerization or solution polymerization. Preferable processes for the preparation of the prepolymers are disclosed in U.S. Patent 5,922,809 at column 9, lines 4 to 51. The prepolymer is prepared by reacting polyols, including diols and triols, with an excess over stoichiometry of one or more isocyanates under reaction conditions sufficient to form a prepolymer having isocyanate functionality and free isocyanate content which meets the criteria discussed above. The isocyanates are reacted with one or more diols and one or more triols. Typically, this reaction takes place at elevated temperatures. To facilitate preparation of prepolymers containing a low concentration of volatile isocyanate monomers, there is a need to carefully control certain parameters. For many conventional uses of polyurethane prepolymers, careful control of viscosity is important. If the viscosity is not carefully controlled, then the prepolymer may not function as desired or the formulations this prepolymer is used in, may require additional components to achieve the desired rheological properties.

Preferably, the prepolymers of the invention demonstrate the viscosity sufficient to allow the use of the prepolymers in adhesive, sealer, damper and coating applications. More preferably, the viscosity is chosen such that the polyurethanes may be used in adhesive formulations. Preferably, the prepolymers as prepared demonstrate a viscosity of 6000 centipoise (600 N-S/m²) or greater and more preferably 8,000 centipoise (800 N-S/m²) or greater. Preferably, the polyurethane prepolymers demonstrate a viscosity of 30,000 centipoise (3,000 N-S/m²) or less and more preferably 20,000 centipoise (2,000 N-S/m²) or less. Above 30,000 centipoise (3,000 N-S/m²), the polyurethanes become too viscous to pump and therefore cannot be applied using conventional techniques. Below 6000 centipoise (600 N-S/m²), the prepolymers do not afford sufficient integrity to allow the compositions utilizing the prepolymers to be utilized in desired applications. Viscosity as used herein is measured by the Brookfield Viscometer, Model DV-E with a RV spindle #5 at a speed of 5 revolution per second and at a temperature of 25°C.

The prepolymers of the invention have an isocyanate content of 0.5 percent by weight or greater and more preferably 0.7 percent or greater. The prepolymers of the invention exhibit an isocyanate content of 1.2 percent by weight or less. Isocyanate content used in this context means the weight percent of the isocyanate groups in the prepolymer as compared to the total weight of the prepolymer. The ratio of isocyanate equivalents to hydroxyl equivalents used to prepare the prepolymer is 1.2:1 or greater, and more preferably about 1.3:1 or greater. The isocyanate equivalent to hydroxyl equivalent ratio in the reactants used to prepare the prepolymer is 1.7:1 or less. At an equivalents ratio of less than 1.2, the prepolymer will gel rendering it useless for many applications.

In order to achieve the desired viscosity levels and volatile monomer concentration levels, it is important to carefully control the ratio of diol to triol used to prepare the prepolymer. The diol to triol ratios should be chosen so as to give the desired viscosity of the polyurethane prepolymer. The ratio of diol to triol is 1:1 or greater, and more preferably 1.2:1 or greater. The diol to triol ratio is 3:1 or less, and most preferably 2:1 or less.

The concentration of the volatile isocyanate monomer is reduced by addition of small amounts of a low molecular weight isocyanate reactive compound. An isocyanate reactive compound is a compound which contains one or more active hydrogen atom-containing groups capable of reacting with isocyanate groups to form a urethane or urea linkage. Such low molecular weight isocyanate reactive compounds are preferably monofunctional and preferably may be monofunctional amines, thiols or alcohols. Preferably an amount of low molecular weight isocyanate reactive compound which gives the desired concentration of volatile isocyanate-containing monomers can be used, preferably 0.4 percent by weight or more in the prepolymer composition used to prepare the prepolymer and more preferably 0.8 percent by weight or more can be used. Preferably, the amount of low molecular weight isocyanate reactive compound used is 3 percent by weight or less and more preferably 2 percent by weight or less. Preferred low molecular weight isocyanate reactive compounds which may be added to the reaction mixture include primary amines, secondary amines, thiols and alcohols; such as diethylamine, bis(3-trimethoxysilyl propyl) amine and 1-octanol.

The isocyanate-containing monomers which may be used in this invention include di(isocyanatophenyl)methanes.

The amount of isocyanate containing compound used to prepare the prepolymer is that amount that gives the desired properties, that is, the appropriate free isocyanate content and viscosities as discussed hereinbefore. Preferably the isocyanate containing compounds are used to prepare in the prepolymer in amount of 6.5 percent by weight or greater, more preferably 7.0 weight percent or greater and most preferably 7.5 weight percent or greater.

One or more as used herein means that at least one, and more than one, of the recited components may be used as disclosed. Nominal as used with respect to functionality means the theoretical functionality, generally this can be calculated from the stoichiometry of the ingredients used. Generally the actual functionality is different due to imperfections in raw material, incomplete conversion of the reactants and formation of byproducts.

The diols and triols are generically referred to as polyols. Polyols useful in this invention are diols and triols corresponding to the polyols described in U.S. Patent 5,922,809 at column 4, line 60 to column 5, line 50. Preferably the polyols (diols and triols) are polyether polyols and more preferably polyoxypropylene polyols. Most preferred triols are ethylene oxide-capped polyols prepared by reacting glycerin with propylene oxide, followed by reacting the product with ethylene oxide.

In some preferred embodiments, polyols with low levels of unsaturation are used such as the ACCLAIM™ polyols are available from Bayer. Preferred low unsaturation polyols have a molecular weight of 5,000 or greater.

The polyols (diols and triols) are present in an amount sufficient to react with most of the isocyanate groups of the isocyanates leaving enough isocyanate groups to give the desired free isocyanate content of the prepolymer. Preferably the polyols are present in an amount of 30 percent by weight or greater based on the weight of the prepolymer, more preferably 35 percent by weight or greater and most preferably 40 percent by weight or greater. Preferably the polyols are present in an amount of 75 percent by weight or less based on the weight of the prepolymer, more preferably 65 percent by weight or less and most preferably 60 percent by weight or less.

The weight ratio of diols to triols impacts the cure rate and strength of the adhesive. If the weight ratio is too low the formulation is too viscous to handle and the resulting adhesive has insufficient elasticity to retain glass in an automobile window frame under crash conditions. If the ratio is too high the adhesive does not have adequate green strength. The amount of diols present is preferably 14 percent by weight or greater based on the weight of the prepolymer, more preferably 16 percent by weight or greater and most preferably 18 percent by weight or greater; and 50 percent by weight or less based on the weight of the prepolymer, more preferably 45 percent by weight or less and most preferably 40 percent by weight or less. The amount of triols present is preferably 4 percent by weight or greater based on the weight of the prepolymer, more preferably 6 percent by weight or greater and most preferably 8 percent by weight or greater; and preferably 40 percent by weight or less based on the weight of the prepolymer, more preferably 36 percent by weight or less and most preferably 32 percent by weight or less.

The polyurethane prepolymers of the invention may further comprise a plasticizer. The plasticizers useful in the prepolymer are common plasticizers useful in polyurethane adhesive applications and well known to those skilled in the art. The plasticizer is present in an amount sufficient to disperse the prepolymer in the final adhesive composition. The plasticizer can be added to the adhesive either during preparation of the prepolymer or during compounding of the adhesive composition. The plasticizer is present in a sufficient amount to result in a prepolymer mixture having the desired viscosity. Preferably the plasticizer is present in 1 percent by weight or greater of the prepolymer formulation (prepolymer plus plasticizer), more preferably 20 percent by weight or greater and most preferably 30 percent by weight or greater. Preferably the plasticizer is present in 55 percent by weight or less of the prepolymer formulation and more preferably 50 percent by weight or less.

The isocyanate functional prepolymers of the invention can be used in any known use which uses isocyanate functional polyurethane based prepolymers. Preferably, the prepolymers are used in adhesive formulations. The prepolymers are preferably used in one part, two part and hot melt adhesive formulations. The formulations can be used in any uses which polyurethane based adhesives are used for including building construction, automotive structural bonding and glass bonding. The polyurethane prepolymers are present in the adhesive composition in an amount sufficient such that when the resulting adhesive cures substrates are bound together. The one or more isocyanate functional polyether based prepolymers are present in sufficient quantity to provide adhesive character to the composition. Such prepolymers have an average isocyanate functionality sufficient to allow the preparation of a crosslinked polyurethane upon cure and not so high that the polymers are unstable. Stability in this context means that the prepolymer or adhesive prepared from the prepolymer has a shelf life of at least 6 months at ambient temperatures, in that it does not demonstrate an increase in viscosity during such period which prevents its application or use. Preferably the prepolymer or adhesive prepared therefrom does not undergo an increase in viscosity of more than about 40 percent during the stated period. Preferably, the average isocyanate functionality is at least 2.2 and preferably at least 2.4. Below 2.2 the ability of the prepolymer to crosslink sufficiently to achieve the desired strength of the cured adhesive is compromised. Preferably the average isocyanate functionality of the prepolymer is 3.0 or less and more preferably 2.8 or less. Above 3.0 average isocyanate functionality the prepolymer and adhesives prepared from the prepolymer may exhibit unacceptable storage stability. Preferably the polyurethane prepolymers are present in an amount of 25 parts by weight of the adhesive composition or greater, more preferably 30 parts by weight or greater and most preferably 35 parts by weight or greater. Preferably the polyurethane prepolymers are present in an amount of 80 parts by weight of the adhesive composition or less, more preferably 76 parts by weight or less and even more preferably 72 parts by weight or less.

The adhesive compositions of the invention may further comprise a polyfunctional isocyanate for the purpose of improving the modulus of the composition and adhesion performance in the cured form. Polyfunctional as used in the context of the isocyanates refers to isocyanates having a nominal functionality of 3 or greater. The polyisocyanates can be any oligomeric or polymeric isocyanates having a nominal functionality of 3 or greater. Preferably the polyfunctional isocyanate has a nominal functionality of 5 or less, even more preferably 4.5 or less and most preferably 4.2 or less. The polyfunctional isocyanate can be any isocyanate which improves the modulus and adhesion of the cured composition. The polyisocyanates can be trimers, isocyanurates or biurets of monomeric isocyanates; or polymeric, the reaction product of several units of one or more monomeric isocyanates. Examples of preferred polyfunctional isocyanates include trimers of hexamethylene diisocyanate, for example, those available from Bayer under the trademark and designation Desmodur™ N3300, and polymeric isocyanates such as polymeric MDI (methylene diphenylisocyanates) such as those marketed by The Dow Chemical Company under the trademark of PAPI™, including PAPI™ 20 polymeric isocyanate.

The polyfunctional isocyanates are present in sufficient amount to impact the modulus of the cured compositions of the invention. If too much is used the cure rate of the composition is unacceptably slowed down. If too little is used the desired modulus levels and adhesion performance are not achievable. The polyfunctional isocyanate is preferably present in an amount of 0.5 percent by weight or greater based on the weight of the composition, more preferably 1 percent by weight or greater and most preferably 1.5 percent by weight or greater. The polyfunctional isocyanate is preferably present in an amount of 8 percent by weight or less based on the weight of the composition, more preferably 6 percent by weight or less and most preferably 5 percent by weight or less.

The adhesive composition of the invention may further comprise a catalyst known for promoting the cure of polyurethanes in the presence of moisture. Preferable catalysts include metal salts such as tin carboxylates, organo titanates (such as alkyl titanates), metal carboxylates, amines and dimorpholinodiethyl ether or alkyl-substituted dimorpholinodiethyl ethers. Preferably the catalyst comprises a mixture of metal carboxylates and one of dimorpholino-diethyl ether or an alkyl substituted dimorpholino diethyl ether. Preferred metal carboxylates include tin carboxylates. Among preferred catalysts are dibutyltin diacetate, dimethyltin dicarboxylate, dimorpholinodiethyl ether and (di- (2-(3,5-dimethylmorpholino) ethyl)) ether. Such catalysts, when employed are preferably employed in an amount based on the weight of the adhesive composition of 0 parts by weight or greater, more preferably 0.001 parts by weight or greater, even more preferably 0.002 parts by weight or greater and most preferably 0.003 parts by weight or greater. Such catalysts are preferably employed in an amount, based on the weight of the adhesive composition, of 5 parts by weight or less, more preferably 1.75 parts by weight or less, even more preferably 1 part by weight or less and most preferably 0.6 parts by weight or less.

The adhesive of the invention may be formulated with fillers and additives known in the prior art for use in adhesive compositions. By the addition of such materials physical properties such as viscosity, flow rates can be modified. However, to prevent premature hydrolysis of the moisture sensitive groups of the polyurethane prepolymer, fillers should be thoroughly dried before admixture therewith.

Optional components of the adhesive of the invention include reinforcing fillers. Such fillers are well known to those skilled in the art and include carbon black, titanium dioxide, calcium carbonate, surface treated silicas, titanium oxide, fume silica, talc. Preferred reinforcing fillers comprise carbon black as described hereinbefore. The reinforcing fillers are used in sufficient amount to increase the strength of the adhesive and to provide thixotropic properties to the adhesive.

One or more carbon blacks may be used in the composition. The amount of carbon black in the composition is that amount which provides the desired color, viscosity and sag resistance. The carbon black is preferably used in the amount of 10 percent by weight or greater based on the weight of the composition, more preferably 12 percent by weight or greater and most preferably 14 percent by weight or greater. The carbon black is preferably present in an amount of 40 percent by weight or less based on the weight of the composition, more preferably 37 percent by weight or less and most preferably 35 percent by weight or less.

Among optional materials in the adhesive composition are clays. Preferred clays useful in the invention include kaolin, surface treated kaolin, calcined kaolin, aluminum silicates and surface treated anhydrous aluminum silicates. The clays can be used in any form, which facilitates formulation of a pumpable adhesive. Preferably the clay is in the form of pulverized powder, spray-dried beads or finely ground particles. Clays may be used in an amount of 0 parts by weight of the adhesive composition or greater, more preferably 1 part by weight or greater and even more preferably 6 parts by weight or greater. Preferably the clays are used in an amount of 20 parts by weight or less of the adhesive composition and more preferably 15 parts by weight or less.

The adhesive composition of this invention may further comprise plasticizers so as to modify the rheological properties to a desired consistency. Such materials should be free of water, inert to isocyanate groups and compatible with a polymer. Suitable plasticizers are well known in the art and preferable plasticizers include alkyl phthalates such as dialkyl phthalates, (dioctyl phthalate or dibutyl phthalate), partially hydrogenated terpene commercially available as "HB-40", trioctyl phosphate, epoxy plasticizers, toluenesulfonamide, chloroparaffins, adipic acid esters, castor oil, toluene and alkyl naphthalenes. The amount of plasticizer in the adhesive composition is that amount which gives the desired rheological properties and which is sufficient to disperse the catalyst in the system. The amounts disclosed herein include those amounts added during preparation of the prepolymer and during compounding of the adhesive. Preferably plasticizers are used in the adhesive composition in an amount of 0 parts by weight or greater based on the weight of the adhesive composition, more preferably 5 parts by weight or greater and most preferably 10 parts by weight or greater. The plasticizer is preferably used in an amount of 50 parts by weight or less based on the total amount of the adhesive composition and more preferably 40 parts by weight or less.

The composition of this invention may further comprise stabilizers, which function to protect the adhesive composition from moisture, thereby inhibiting advancement and preventing premature crosslinking of the isocyanates in the adhesive formulation. Included among such stabilizers are diethylmalonate, alkylphenol alkylates, paratoluene sulfonic isocyanates, benzoyl chloride, vinylsilanes and orthoalkyl formates. Such stabilizers are preferably used in an amount of 0.05 parts by weight or greater based on the total weight of the adhesive composition, preferably 0.1 parts by weight or greater and more preferably 0.5 parts by weight or greater. Such stabilizers are used in an amount of 5.0 parts by weight or less based on the weight of the adhesive composition, more preferably 2.0 parts by weight or less and most preferably 1.5 parts by weight or less.

The composition of this invention may further comprise an adhesion promoter, such as those disclosed in Mahdi U.S. Patent 6,355,127, column 21, line 44 to column 22, line 38 and Hsieh U.S. 6,015,475 column 5, line 27 to Column 6, line 41. The amounts of such adhesion promoters useful are also disclosed in these references.

The adhesive composition may further comprise a hydrophilic material that functions to draw atmospheric moisture into the composition. This material enhances the cure speed of the formulation by drawing atmospheric moisture to the composition. Preferably the hydrophilic material is a liquid. Among preferred hydrophilic materials are pyrolidinones such as 1 methyl-2-pyrolidinone, available from Ashland Chemical Company under the trademark M-Pyrol™. The hydrophilic material is preferably present in an amount of 0.1 percent by weight or greater and more preferably 0.2 percent by weight or greater and preferably 1.0 percent by weight or less and most preferably 0.5 percent by weight or less. Optionally the adhesive composition may further comprise a thixotrope. Such thixotropes are well known to those skilled in the art and include alumina, limestone, talc, zinc oxides, sulfur oxides, calcium carbonate, perlite, slate flour, salt (NaCl), cyclodextrin. The thixotrope may be added to the adhesive of composition in a sufficient amount to give the desired rheological properties. Preferably the thixotrope is present in an amount of 0 parts by weight or greater based on the weight of the adhesive composition, preferably 1 part by weight or greater. Preferably the optional thixotrope is present in an amount of 10 parts by weight or less based on the weight of the adhesive composition and more preferably 5 parts by weight or less.

Other components commonly used in adhesive compositions may be used in the adhesive composition of this invention. Such materials are well known to those skilled in the art and may include ultraviolet stabilizers, light stabilizers and antioxidants.

As used herein all parts by weight relative to the components of the adhesive composition are based on 100 total parts by weight of the adhesive composition.

The adhesive composition of this invention may be formulated by blending the components together using means well known in the art. Generally the components are blended in a suitable mixer. Such blending is preferably conducted in an inert atmosphere in the absence of oxygen and atmospheric moisture to prevent premature reaction. It may be advantageous to add any plasticizers to the reaction mixture for preparing the isocyanate containing prepolymer so that such mixture may be easily mixed and handled. Alternatively, the plasticizers can be added during blending of all the components. Once the adhesive composition is formulated, it is packaged in a suitable container such that it is protected from atmospheric moisture and oxygen. Contact with atmospheric moisture and oxygen could result in premature crosslinking of the polyurethane prepolymer-containing isocyanate groups.

The adhesive composition of the invention is used to bond a variety of substrates together as described hereinbefore. The composition can be used to bond porous and nonporous substrates together. The adhesive composition is applied to a substrate and the adhesive on the first substrate is thereafter contacted with a second substrate. In preferred embodiments, the surfaces to which the adhesive is applied are cleaned and primed prior to application, see for example U.S. Patents 4,525,511, 3,707,521 and 3,779,794. Generally the adhesives of the invention are applied at ambient temperature in the presence of atmospheric moisture. Exposure to atmospheric moisture is sufficient to result in curing of the adhesive. Curing can be accelerated by the addition of additional water or by applying heat to the curing adhesive by means of convection heat, microwave heating.

The adhesive composition is preferably used to bond glass or abrasion resistant coated plastic to other substrates such as metal or plastics. In a preferred embodiment the first substrate is plain glass and the second substrate is a painted metal panel. In another preferred embodiment the first substrate is glass coated with a ceramic frit or plastic coated with an abrasion resistant coating and the second substrate is a painted metal panel. Preferably the glass or plastic is cleaned and has a glass primer applied to the area to which the adhesive is to be bonded.

The adhesives of the invention can be used to bond glass or plastic coated with an abrasion resistant coating into structures such as windshields into automobiles. The adhesive can bond to certain painted surfaces without the need to prime the painted surface before applying the adhesive. Examples of automotive paint systems for which this adhesive can bond without a need for a primer include DuPont Gen IV acrylic silane paint, PPG MAC8000 Carbamate paint and PPG TKU1050 two part polyurethane paint. Alternatively, the adhesive system can be utilized with known paint primer systems wherein the primer is applied to the painted surface to which the adhesive can be applied prior to applying the adhesive. Such paint primer systems are well known to those skilled in the art and include Betaseal^{®} 43533 primer available from The Dow Chemical Company.

The one substrate can be a sheet of rigid plastic coated with an abrasion resistant coating. Among preferred plastic materials used are included, acrylics, polycarbonates and hydrogenated styrene block copolymers wherein the styrene content is greater than about 50 percent by weight. Preferably abrasion resistant coatings are polysiloxanes.

In bonding the adhesive to glass or a plastic coated with an abrasion resistant coating, the glass is typically treated with a glass primer system prior to application of the adhesive. Any known glass primer system which works with polyurethane systems may be used with this adhesive. Examples of such known systems include Betaseal^{®} 43518 primer and Betaseal^{®} 43520A primer available from The Dow Chemical Company.

In a preferred embodiment, the adhesive is used with a non-isocyanate based primer system to provide a low or non-isocyanate bonding system. Preferably, the glass primer comprises one or more solvents, one or more trialkoxysilane-containing compounds, optionally one or more titanates and optionally a film-forming resin. Preferably, the trialkoxysilane-containing compound is trimethoxysilane-containing compounds such as aminosilanes. Preferred film-forming resins are acrylic resins. Preferred solvents are dialkyl ketones, such as methyl ethylketone. Preferred trimethoxysilane compounds include bis (3-trimethoxysilylpropyl)amine. A preferred isocyanate-free glass primer system is Betaseal^{®} 43526N glass primer available from The Dow Chemical Company.

In a preferred embodiment where the adhesive can not bond to a substrate without the need for a primer system, the painted surface to which the adhesive will be applied can be treated with an acid-containing solution as disclosed in U.S. Patent 6,053,971. Preferably, the acid is dodecylbenzene sulfonic acid, dinonylnapthlene disulfonic acid or dinonylnapthlene sulfonic acid. Preferably, the solvents are benzene, toluene, xylene, cumene or naphtha. More preferably, the acid is dodecyl benzene sulfonic acid. Preferably, the acid-containing composition comprising from about 0.5 to about 3 percent by weight of acid and from about 97 percent to about 99.5 percent by weight of solvent.

A preferred process for mounting glass to a vehicle, comprises:
a) contacting an isocyanate free glass primer with a portion of a glass or an abrasion resistant coated plastic window to be installed in a vehicle which comes into contact with a flange of the vehicle;
b) contacting a composition comprising a hydrocarbyl substituted aromatic sulfonic acid and solvent with the flange of the vehicle;
c) applying a composition according to the invention to the flange or the portion of the window which will come in contact with the flange;
d) placing the window into the vehicle such that the adhesive is disposed between the window and the flange; and
e) allowing the adhesive to cure.

In the embodiment where the adhesives utilizing the prepolymer of the invention are used along with an isocyanate-free glass primer and acid composition described hereinbefore, a very low free-isocyanate monomer containing system is provided to bond glass into a substrate or structure such as an automobile or a building.

The adhesives of the invention preferably demonstrate a heat age viscosity growth of 45 percent or less, more preferably 35 percent or less and most preferably 30 percent or less. Heat age growth is the increase in viscosity after heating the adhesive for 3 days at 54°C. The 3 day initial lap shear strength is preferably about 250 psi (172 MPa) or greater, more preferably about 365 psi (252 MPa) or greater and most preferably about 500 psi (345 MPa) or greater. The lap shear is tested 3 days after application of the adhesive at 23 °C and 50 percent relative humidity wherein the samples are stored according to SAE J1529 test procedure which is described below. An adhesive bead approximately 6.3 mm width by 6.3 mm height is applied along the width of the 25 mm by 100 mm glass coupon and approximately 6.3 mm from the glass coupon primed end. The second substrate is immediately placed on the adhesive bead and the sample is allowed to cure at the condition of 23 °C and 50 percent relative humidity (RH) for the defined certain period. The testing speed is at a rate of 5 cm/min with an Instron tester.

Preferably, the adhesive of the invention exhibits a tack-free time of about 10 minutes or greater, and more preferably about 15 minutes or greater and most preferably about 20 minutes or greater. Tack-free time is measured according to the following test procedure. A 150 mm long and 6 mm diameter adhesive bead is laid on a release paper at 23 °C, 50 percent relative humidity. The bead is touched gently using a polyethylene film and the time when the bead is tack free and the polyethylene film is clean from the contact of the bead is recorded.

Viscosities of prepolymers as described herein are determined according to the procedure disclosed in Bhat U.S. Patent 5,922, 809 at column 12 lines 38 to 49. Viscosities of adhesives as described herein are determined using press flow. The press flow is the time it takes for 20 grams of adhesive to pass through a 0.157 in. (4 mm) orifice at 80 psi (552 kPa) pressure. 3 day-54 °C heat age growth of the adhesive is defined as the press flow increase after 3 day-54 °C heat treatment on the adhesive divided by the initial press flow of the adhesive.

Molecular weights as described herein are determined according to the following to the procedure disclosed in Bhat U.S. Patent 5,922, 809 at column 12 lines 50 to 64.

### Illustrative Embodiments of the Invention

The following examples are provided to illustrate the invention, but are not intended to limit the scope thereof. All parts and percentages are by weight unless otherwise indicated.

### Ingredients

Voranol^{®} 220-056 polyol is polyoxypropylene based diol with molecular weight (MW) about 2000 and hydroxyl equivalent weight (EW) 1000 available from The Dow Chemical Company.
Voranol^{®} 232-036 polyol is polyoxypropylene based triol with molecular weight (MW) about 4500 and hydroxyl equivalent weight (EW) 1500 available from The Dow Chemical Company.
PAPI™ 94 polymeric isocyanate is a polymeric MDI having an average isocyanate functionality of 2.3 an equivalent weight of 131 available from The Dow Chemical Company.
Metacure^{®} T-9 tin catalyst is stannous octoate available from Air Products Chemical.
N, N'-bis(3-trimethoxysilyl propyl) amine available from GE Silicones.
Jeffcat^{®} DMDEE catalyst is dimorpholino diethyl ether available from Huntsman Chemical.
Betaseal^{®} 43518 primer is an organosilane containing glass primer available from The Dow Chemical Company.
Betaseal^{®} 43520A primer is an isocyanate containing glass primer available from The Dow Chemical Company.
Betaseal^{®} 43533atu primer is an isocyanate containing painted flange primer available from The Dow Chemical Company.
Betaseal^{®} 43526 primer is a non-isocyanate glass primer available from The Dow Chemical Company.
M-Pyrol™ 1-methyl-2-pyrolidinone available from Ashland Chemical Company.
Formrez^{®} UL-28 tin catalyst is a dimethyltin dicarboxylate catalyst available from GE Silicones.
Desmodur^{®} N-3300 trimer of hexamethylene diisocyanate available from Bayer.
Doverphos^{®} 675 tetrakis isodecyl 4,4'-isopropylidene diphosphite available from Dover Chemical Corporation.
Isonate^{®} 125M isocyanate diphenylmethane-4,4'-diisocyanate (methylene diphenyl diisocyanate) (MDI) having an equivalent weight of 125 available from The Dow Chemical Company.
Betaseal^{®} 16100 primer is a non-isocyanate containing glass primer available from The Dow Chemical Company.
Trimethyl hexamethylene diisocyanate is available from Degussa Corporation.
DABCO^{®} DC-2 catalyst is a salt of tertiary amine and a dialkyltin dicarboxylate catalyst available from Air Products Company.
Modified DABCO^{®} DC-2 catalyst is a reaction product of DABCO^{®} DC-2 catalyst with trimethyl hexamethylene diisocyanate wherein the glycol solvent present in DABCO^{®} DC-2 catalyst is completely reacted and converted to urethane. The NCO content of modified DABCO^{®} DC-2 is zero.
Silquest^{®} A171 silane^{®} A-171 vinyltrimethoxysilane available from GE Silicones.
DDBSA is dodecylbezene sulfonic acid available from Spectrum Chemicals.
Multiflow is a defoaming agent available from Solutia.
Betaseal^{®}43555 primer is a nonisocyanate primer used for plastics and available from The Dow Chemical Company.

### Preparation of Control Prepolymer A

Into a 2-liter kettle equipped with an agitator and a heating jacket was charged 304.35 g Voranol^{®} 220-56 polyol, 441.15 g Voranol^{®} 232-036 polyol, and 30 g of dialkyl phthalate plasticizer under nitrogen protection. The reactants were mixed and heated under nitrogen until the mixture reached 54°C. Once the mixture reached 54°C, 134.40 g of diphenylmethane 4,4'-diisocyanate (Isonate^{®} 125M) stored at 45°C was added and mixed in. Then, 0.08 g of Metacure^{®} T-9 tin catalyst was added dropwise and slowly. The reaction exothermed and after the reaction temperature peaked, the reaction was held between 80°C and 85°C for 30 minutes. Then, the temperature set point on heating unit was set at 60°C. Thereafter, 574.80 g of dialkyl phthalate, 12.75 g of diethylmalonate and 2.40 g of Multiflow were added. The mixture was agitated for 60 minutes. Thereafter, the resulting prepolymer was packaged in an air tight container. The prepolymer had a viscosity of 6720 centipoise (25°C) and a free monomeric MDI content, according to HPLC, of 1.27 percent. An isocyanate percentage in the prepolymer was 1.30 percent by weight.

### Reference Example I (not within the scope of the claims)

### Preparation of Polyurethane Prepolymer B

513 grams (g) of Voranol^{®} 220-056 polyol, 128.25 g of Voranol^{®} 232-036 and 90.75 g of dialkyl phthalate plasticizer were charged into a 2 liter kettle and mixed with heating under a blanket of nitrogen wherein the temperature set point is 54°C. Once the reaction mixture reached 54°C, 140.85 g of PAPI™ 94 polymeric MDI was added and .08 grams of Metacure^{®} T-9 catalyst was added in a dropwise manner. The reaction exothermed. After reaching the peak temperature, the reaction mixture was maintained at a temperature above 80°C, and less than 90°C, for 30 minutes. 12.29 Grams of 1-octanol was added to the reaction mixture and the reaction mixture was held to a temperature between 80 and 90°C for another 30 minutes. Thereafter, the temperature set point for the heating unit for the reaction mixture was set to 60°C and 602 g of dialkyl phthalate, and 12.75g of diethyl malonate were added and mixed for 60 minutes under nitrogen and the NCO percentage was measured. The resulting material was measured for viscosity at 25 °C using a Brookfield viscometer described hereinbefore.

Thereafter, the resulting product was packaged in an air and moisture-tight container to prevent unnecessary cure. The resulting prepolymer demonstrated viscosity at 25°C of 9120 centipoise (9.12 N-S/m²) and demonstrated a free monomeric MDI level determined according to high pressure liquid chromatograph (HPLC) of 0.37 percent. The isocyanate content of the prepolymer was 0.986 percent.

### Preparation of Prepolymer C

The following ingredients were used to prepare polyurethane prepolymer as described for the Preparation of Prepolymer B using a 4-liter reaction kettle. N,N'-bis(3-trimethoxypropyl) amine was added at the end of the process and the mixture was mixed for 2 hours under nitrogen. The prepolymer was packaged and the viscosity was measured at room temperature.

| Component | Wt% | Weight (g) |
|---|---|---|
| Voranol^{®} 220-056 Polyol | 23.940 | 813.96 |
| Voranol^{®} 232-036 Polyol | 23.940 | 813.96 |
| dialkyl phthalate | 2.000 | 68.00 |
| Isonate 125M isocyanate | 7.730 | 262.82 |
| Metacure^{®} T-9 catalyst | 0.005 | 0.17 |
| dialkyl phthalate | 40.710 | 1384.14 |
| diethyl malonate | 0.850 | 28.90 |
| N,N'-bis(3-trimethoxypropyl) amine | 0.820 | 27.88 |
| Sum | 100.00 | 3399.83 |

The properties of the prepolymer prepared demonstrated a viscosity of 25°C of 14,000 centipoise (1400 N-S/m²), free monomeric MDI percentage according to HPLC of 0.37 percent and a free isocyanate compound in the prepolymer of 0.76 percent by weight.

### Preparation of Control Adhesive A

Control prepolymer A described above in the amount of 944.4 g was mixed with Jeffcat™ dimorpholino diethylether in the amount of 7.5 g and dialkyl phthalate (10.05 g) in a 1 gallon mixer. The mixture was degassed under vacuum and mixed for 10 minutes. The vacuum was broken with nitrogen. 388.0 g of dried carbon black and 150.0 g of dried clay were added. The vacuum was applied slowly. When half of the vacuum was achieved mixing was started to wet out the fillers for 2 minutes. The vacuum valve was then fully opened and mixing was continued under full vacuum for 15 minutes. The mixture was scraped down and the full vacuum was applied again before additional mixing. The mixture was mixed under vacuum for another 15 minutes. The vacuum was broken with nitrogen and the adhesive composition was packaged into sealed tubes. The resulting adhesive was tested for tack-free time, initial press flow according to the procedure described hereinbefore, heat age growth as according to the procedure described hereinbefore, and free MDI percent according to the procedure described hereinbefore.

### Preparation of Adhesive B

Polyurethane Prepolymer B according to Reference Example 1 in the amount of 767.85 g was mixed with Jeffcat™ dimorpholino diethylether in the amount of 2.42 g in a 1 gallon mixer. The mixture was degassed under vacuum and mixed for 15 minutes. The vacuum was broken with nitrogen and 330 g of dried carbon black was added. The vacuum was applied slowly. When half of the vacuum was achieved mixing was started to wet out the fillers for 2 minutes. The vacuum valve was then fully opened and mixing was continued under full vacuum for 15 minutes. The mixture was scraped down and the full vacuum was applied again before additional mixing. The mixture was mixed under vacuum for another 10 minutes. The vacuum was broken with nitrogen and the adhesive composition was packaged into sealed tubes.

### Preparation of Adhesive C

An adhesive was made utilizing polyurethane Prepolymer C. Into a one gallon mixer were added 780.58 g of the polyurethane prepolymer, 24 g of dialkyl phthalate plasticizer and 36 g of Desmodur^{®} N3300 hexamethylene diisocyanate trimer, 3.54 g of M-Pyrol™ 1-methyl-2-pyrolidinone, 3.48 g of dimorpholinodiethylether and 0.2 g of Formrez^{®} UL28 tin catalyst. The mixture was degassed and mixed in the vacuum for 15 minutes. The vacuum was broken with nitrogen and 348 g of carbon black was added. The vacuum was applied slowly when half of the vacuum was achieved, and the material was mixed slowly for 2 minutes to wet the filler out. The vacuum valve was fully opened and the material is mixed with a full vacuum for 15 minutes. The mixture was scraped down and 4.20 g of Doverphos™ 675 diphosphite was added. Full vacuums were applied before mixing; the mixture is mixed under vacuum for 10 minutes. The vacuum was broken with nitrogen and the material was packaged into sealed tubes.

### Reference Example 1, Example 2 and Control Example 3

Adhesives A, B and C were tested for tack-free time, initial press flow, heat age growth, and free MDI percent according to the procedure described hereinbefore. Quick Knife adhesion was tested according to SAE J1720 on primed glass primed with Betaseal^{®} 43518 and 43520 primers. In a Quick Knife test, a 6.3 mm (width) x 6.3 mm (height) x 100 mm (length) adhesive bead is placed on the tested substrate and the assembly is cured for a specific time at 23°C and 50 percent RH (relative humidity). The cured bead is then cut with a razor blade at a 45° angle while pulling back the end of the bead at 180° angle to the substrate. The degree of adhesion is evaluated as adhesive failure (AF) and /or cohesive failure (CF). In case of AF, the cured bead can be separated from the substrate and in CF separation occurs only within the adhesive bead as a result of knife cutting. The Quick Knife adhesion test was run on two samples, one was tested after 3 days of initial cure at 23°C, 50 percent relative humidity, second was tested after 7 days of initial cure at 23°C, 50 percent relative humidity and then 7 days of heat treatment at 80°C. Lap shears according to the procedure described hereinbefore were determined after 3 days from application when the samples were stored at 23°C and 50 percent relative humidity. The lap shear testing was for a sandwich sample of the adhesive between a primed glass primed with Betaseal^{®} 43518 primer and Betaseal^{®} 43520A primer and a primed E-coat panel primed with Betaseal^{®} 43533atu primer. The testing results of the performance and property on Adhesives A, B and C are contained in Table 1.

**Table 1**

| Performance/Property | Ref. Example 1* Adhesive B | Example 2 Adhesive C | Control Example 3* Adhesive A |
|---|---|---|---|
| Tack Free Time (23°/50 %RH), min. | 30 | 24 | 12 |
| Initial Press Flow (80 psi/0.157"), sec. | 36 | 29 | 38 |
| Heat % Age Growth (3 day/54°C) | 3.9 | 1.8 | 10.5 |
| Free MDI%, HPLC | 0.24 | 0.25 | 0.63 |
| QKA¹ | | | |
| 3 day initial 23°C/50%RH | 100CF | 100CF | 100CF |
| 7 day initial + 7 day 80°C | 100 CF | 100 CF | 100 CF |
| QKA² | | | |
| 3 day initial 23°C/50% RH | 100 CF | 100 CF | 100 CF |
| 7 day initial + 7 day 80°C | 100 CF | 100 CF | 100 CF |
| Lap shear³, 3 day initial 23°C/50%RH | 743 psi (5.12 MPa) | 891 psi (6.14 MPa) | 894 psi (6.16 MPa) |
| | 100 CF | 100 CF | 100 CF |

| | | | |
|---|---|---|---|
| Notes: 1. The substrate is plain glass primed with Betaseal^{®} 43518 and Betaseal^{®} 43520A primers. 2. The substrate is electro coated steel panel primed with Betaseal^{®} 43533 primer. 3. In the lap shear structure, one substrate is electric coated steel panel primed with Betaseal^{®} 43533ATU primer and the second substrate is a glass having a zinc based ceramic frit primed sequentially with Betaseal^{®} 43518 and Betaseal^{®} 43520A primers. *not within the scope of the claims | | | |

### Example 4

A test sample was prepared utilizing Adhesive C in which a fritted glass and coated panel coupons were tested with such adhesive. The fritted glass has a zinc type enamel and was primed with Betaprime™ 43526 primer available from The Dow Chemical Company. In one embodiment, the coating on the coupon was a DuPont GEN IV acrylic silane coating wherein no primer was used on the coating. For another example, the coating on the coupon was a PPG 2 part polyurethane coating TKU1050. A Quick Knife adhesion test was performed on the glass side and on both coupons using the two different paints after 3 days storage at 23°C and 50 percent relative humidity. All 3 samples demonstrated 100 percent cohesive failure.

### Control Examples 5-9 and Example 10

In Control Examples 5-9 and Example 10 prepolymers were prepared in the same manner as Prepolymer A. Table 2 shows the percentages and weights of the components in the examples. Note that for Example 10, one additional step is used in that N,N'-bis(3-trimethoxypropyl)amine (12.3 g) was added at the end of the process and the mixture was mixed thereafter for additional 2 hours under nitrogen.

**Table 2**

| Component | Control Ex. 5* | | Control Ex. 6* | | Control Ex. 7* | | Control Ex. 8* | | Control Ex. 9* | | Ex. 10 | |
|---|---|---|---|---|---|---|---|---|---|---|---|---|
| | WT% | WT/g | WT% | WT/g | WT% | WT/g | WT% | WT/g | WT% | WT/g | WT% | WT/g |
| Voranol^{®} 220-056 polyol | 20.29 | 304.35 | 20.29 | 304.35 | 23.94 | 359.10 | 26.600 | 399.00 | 29.90 | 448.50 | 23.94 | 359.10 |
| Voranol^{®} 232-036 polyol | 29.41 | 441.15 | 29.41 | 441.15 | 23.94 | 359.10 | 19.95 | 299.25 | 15.00 | 225.00 | 23.94 | 359.10 |
| Dialkyl Phthalate (Part 1) | 2.000 | 30.00 | 2.000 | 30.00 | 2.000 | 30.00 | 2.000 | 30.00 | 2.000 | 30.00 | 2.000 | 30.00 |
| Isonate^{®} 125M isocyanate | 7.98 | 119.7 | 7.73 | 115.95 | 7.73 | 115.95 | 7.73 | 115.95 | 7.73 | 115.95 | 7.73 | 115.95 |
| Metacure^{®} T-9 | 0.005 | 0.08 | 0.005 | 0.08 | 0.005 | 0.08 | 0.005 | 0.08 | 0.005 | 0.08 | 0.005 | 0.08 |
| Dialkyl Phthalate (Part II) | 39.30 | 589.50 | 39.55 | 593.25 | 41.530 | 622.95 | 42.70 | 640.50 | 44.350 | 665.25 | 40.710 | 610.65 |
| Diethyl Malonate | 0.850 | 12.75 | 0.850 | 12.75 | 0.850 | 12.75 | 0.850 | 12.75 | 0.850 | 12.75 | 0.850 | 12.75 |
| Multiflow | 0.160 | 2.40 | 0.160 | 2.40 | 0.000 | 0.00 | 0.160 | 2.40 | 0.160 | 2.40 | | |
| N,N'-bis(3-trimethoxypropyl)am ine | | | | | | | | | | | 0.820 | 12.30 |
| Total | 100.00 | 1499.9 | 100.00 | 1499.93 | 100.00 | 1499.93 | 100.00 | 1499.93 | 100.00 | 1499.93 | 100.00 | 1499.93 |

| | | | | | | | | | | | | |
|---|---|---|---|---|---|---|---|---|---|---|---|---|
| *not within the scope of the claims | | | | | | | | | | | | |

### Reference Examples 11-13 (not within the scope of the claims) -Process for Preparation of Polymeric MDI Based Prepolymers

Voranol^{®} 220-056 diol and Voranol^{®} 232-036 triol along with the first portion of plasticizer were charged into a 2 liter glass kettle and mixed with heating under nitrogen. The temperature set point on the heating unit was set at 54°C. PAPI™ 94 polymeric MDI was added and mixed into the kettle when the temperature of the mixture reached 54°C. Thereafter, T-9 tin catalyst was added drop wise and slowly. The reaction exothermed. Once the reaction temperature peaked, the reaction was held at 80°C for 30 minutes. Thereafter, the temperature was set at a set point of 55°C. The second portion of plasticizer, diethyl malonate and multi-flow were added into the mixture and mixed for 30 minutes. A sample was drawn to measure the percent NCO. The mixture was mixed for another 30 minutes under nitrogen and the isocyanate percentage was measured. The resulting prepolymer was packaged in an air and moisture tight package and the viscosity was measured at room temperature. In Example 12, the process was discontinued after catalyst addition because a highly viscous gel material was obtained. Table 3 discloses the amounts of components used in each example.

**Table 3**

| Component | Ref Ex. 11* | | Ref Ex. 12* | | Ref Ex. 13* | |
|---|---|---|---|---|---|---|
| | WT% | WT/g | WT% | WT/g | WT% | WT/g |
| Voranol^{®} 220-056 polyol | 20.29 | 202.90 | 34.20 | 513.00 | 38.40 | 576.00 |
| Voranol^{®} 232-036 polyol | 29.41 | 294.10 | 8.550 | 128.25 | 9.600 | 144.00 |
| Dialkyl Phthalate | 2.000 | 20.00 | 6.050 | 90.75 | 6.050 | 90.75 |
| PAPI™ 94 polymeric MDI | 9.390 | 93.90 | 9.390 | 140.85 | 9.390 | 140.85 |
| Metacure^{®} T-9 catalyst | 0.005 | 0.05 | 0.005 | 0.08 | 0.005 | 0.08 |
| Dialkyl Phthalate (Part II) | 37.890 | 378.90 | 40.79 | 611.85 | 35.540 | 533.10 |
| Diethyl Malonate | 0.850 | 8.50 | 0.85 | 12.75 | 0.850 | 12.75 |
| Multiflow | 0.160 | 1.60 | 0.160 | 2.40 | 0.160 | 2.40 |
| Total | 100.00 | 1000.0 | 100.00 | 1499.9 | 100.00 | 1499.9 |

| | | | | | | |
|---|---|---|---|---|---|---|
| *not within the scope of the claims | | | | | | |

Table 4 lists the prepolymers, the isocyanates to hydroxyl ratio, the diol to triol equivalent ratio, the viscosity, free NCO content and percent of MDI as measured by HPLC for the prepolymers of Examples 5-13.

**Table 4**

| Example | NCO/OH | Eq (diol)/Eq (triol) | Viscosity (25°C) Centipoise (N-S/m²) | NCO% | MDI% (HPLC) |
|---|---|---|---|---|---|
| 5* | 1.6 | 1.0 | 16000 | 0.9 | na |
| | | | (16.00) | | |
| 6* | 1.55 | 1.0 | 23200 | 0.88 | 0.58 |
| | | | (23.20) | | |
| 7* | 1.55 | 1.5 | 10880 | 0.80 | 0.66 |
| | | | (10.88) | | |
| 8* | 1.55 | 2.0 | 8400 | 0.87 | 0.47 |
| | | | (8.400) | | |
| 9* | 1.55 | 3.0 | 5600 | 0.88 | na |
| | | | (5.600) | | |
| 10 | 1.55 | 1.5 | 14000 | 0.76 | 0.37 |
| | | | (14.00) | | |
| 11* | 1.8 | 1:1 | gel | na | na |
| 12* | 1.8 | 6:1 | 7920 | 1.24 | 0.68 |
| | | | (7.920) | | |
| 13* | 1.6 | 6:1 | 42800 | 1.04 | na |
| | | | (42.80) | | |

| | | | | | |
|---|---|---|---|---|---|
| Notes: *not within the scope of the claims NCO/OH=the ratio of total NCO equivalents to total hydroxyl equivalents in the prepolymer recipe. Eq (diol)/Eq (triol) =the ratio of total hydroxyl equivalents from diol to that from triol in the prepolymer recipe. Viscosity (25)=the Brookfield viscosity in centipoises measured at 25°C. NCO%=the isocyanate group percentage content by weight in the finished prepolymer. MDI% (HPLC)=the monomeric MDI weight percentage in the finished prepolymer determined by HPLC. NCO/OH=the ratio of total NCO equivalents to total hydroxyl equivalents in the prepolymer recipe. Control Examples 14 and 15, Example 16 and Reference Example 17-Sealant Preparation | | | | | |

The polyurethane prepolymer (of either Control Example 7, Example 10 or Reference Example 12), Jeffcat^{®} DMDEE catalyst, Desmodur^{®} N-3300 hexamethylene diisocyanate trimer, modified DABCO^{®} DC2 catalyst, Silquest^{®} A171 silane, M-Pyrol^{®} 1-methyl-2-pyrolidinone, Doverphos^{®} 675 diphosphite and Formrez^{®} UL28 catalyst were added to a one gallon mixer equipped with an agitator, heating jacket, nitrogen inlet and vacuum pump. The mixer was degassed and the mixture was mixed under vacuum for 10 minutes. The vacuum was broken with nitrogen and carbon black was added. The vacuum was applied slowly. When half vacuum was achieved, mixing was started slowly to wet the fillers out for 2 minutes. The vacuum valve was then fully opened and the mixture was mixed under full vacuum for 15 minutes. The mixture was scraped down. Thereafter, full vacuum was applied again and the mixture was mixed for 15 minutes. At that point, mixing was stopped and the vacuum was broken with nitrogen and the resulting adhesive was packaged into sealed tubes. Table 5 provides a list of the components of each of Examples 15-18.

**Table 5**

| Component | Control Ex. 14* | | Control Ex. 15* | | Ex. 16 | | Ref Ex. 17* | |
|---|---|---|---|---|---|---|---|---|
| | WT% | WT% | WT% | WT% | WT% | WT% | WT% | WT% |
| Prepolymer 7 | 69.75 | 1046.25 | 66.65 | 999.75 | | | | |
| Prepolymer 10 | | | | 0.00 | 65.750 | 986.25 | | |
| Prepolymer 12 | | | | | | | 69.75 | 976.5 |
| Silquest^{®} A-171 silane | | | | | 0.120 | 1.80 | | |
| Hexamethylene Diisocyanate Trimer | | 0.00 | 2.40 | 36.00 | 3.000 | 45.00 | | |
| Modified DABCO^{®} DC-2 catalyst | | 0.00 | 0.25 | 3.75 | | 0.00 | | |
| Jeftcat™ DMDEE catalyst | 0.25 | 3.75 | 0.30 | 4.50 | 0.290 | 4.35 | 0.25 | 3.5 |
| M-Pyrol™ 1-methyl-2-pyrolidinone | | 0.00 | | 0.00 | 0.295 | 4.43 | | |
| Formrez^{®} UL28 catalyst in dialkyl phthalate, 10% | | | | 0.00 | 0.140 | 2.10 | | |
| Carbon Black | 30.00 | 450.00 | 30.00 | 450.00 | 30.00 | 450.00 | 30.00 | 420 |
| Doverphos™ 675 diphosphite | | 0.00 | 0.400 | 6.00 | 0.400 | 6.00 | | |
| Total | 100.00 | 1500.0 | 100.00 | 1500.0 | 100.00 | 1499.9 | 100.00 | 1400 |

| | | | | | | | | |
|---|---|---|---|---|---|---|---|---|
| *not within the scope of the claims | | | | | | | | |

Lap shear tests were performed on a variety of coupons prepared utilizing the adhesives of Control Examples 14 and 15, Example 16 and Reference Example 17, the results of the testing is contained in Table 6. The samples tested were a sandwich of primed glass coupons and coated metal coupons with the cured adhesive located between the coupons. Glass coupon setup A was a glass coupon primed with Betaseal^{®} 43526 N primer. Metal coupon set up B is a coupon coated with PPG 2 part polyurethane coating TKU1050 wherein the panel was wiped with naphtha prior to application of the adhesive. Metal coupon C was a metal coupon coated with PPG Carbamate coating MAC 8000, which is wiped with 0.75 percent DDBS in naphtha using linen free cheese cloth. Metal coupon D set up was a metal coupon coated with PPG carbamate paint HSAM wherein the panel was wiped with 0.75 percent DDBSA in naphtha using linen free cheese cloth. Glass coupon E was a glass coupon primed using Betaseal^{®} 16100 primer. Glass coupon F was a glass coupon primed sequentially with Betaseal^{®} 43518 primer and Betaseal^{®}43520 glass primer. Metal coupon G was a metal coupon coated with standard E-coat and primed using Betaseal^{®} 43533atu primer. The glass coupons used in glass coupon set-ups A, E and F above have a bismuth zinc based ceramic frit. The coupons were tested under two sets of conditions. According to Condition 1 the samples were:
1. Tested after 3 days initial cure at 23°C and 50% RH (relative humidity). Three samples were tested and averaged.

According to Condition 2 the samples were:
2. Tested after 3 days initial cure at 23°C and 50% RH and then 14 days humidity treatment of 38°C and 100% RH. Three samples were tested and averaged.

**Table 6**

| Glass Set Up | Metal Coupon Set Up | Test Conditions | 14* | 15* | 16 | 17* |
|---|---|---|---|---|---|---|
| A | B | Condition 1¹ | 714 psi/100 CF | 776 psi/100 CF | 828 psi/100 CF | 608 Psi/100 CF |
| | | | (4.92 MPa) | (5.35 MPa) | (15.71 MPa) | (4.19 MPa) |
| | | Condition 2² | 787 psi/100 CF | 1043 psi/100 CF | 774 psi/100 CF | 640 psi/100 CF |
| | | | (5.42 MPa) | (7.19 MPa) | (5.34 MPa) | (4.41 MPa) |
| A | C | Condition 1 | na | 740 psi/100 CF | 831 psi/100 CF | na |
| | | | | (5.10 MPa) | (5.73 MPa) | |
| | | Condition 2 | | 866 psi/100 CF | 754 psi/100 CF | |
| | | | | (5.97 MPa) | (5.20 MPa) | |
| A | D | Condition 1 | na | 1028 psi/100 CF | 1099 psi/100 CF | na |
| | | | | (7.09 MPa) | (7.58 MPa) | |
| | | Condition 2 | | 1110 psi/100 CF | 998 psi/100 CF | na |
| | | | | (7.65 MPa) | (6.88 MPa) | |
| E | B | Condition 1 | 709 psi/100 CF | 871 psi/100 CF | 839 psi/100 CF | 874 psi/100 CF |
| | | | (4.89 MPa) | (6.01 MPa) | (5.78 MPa) | (6.02 MPa) |
| | | Condition 2 | 808 psi/100 CF | 1020 psi/100 CF | 927 psi/100 CF | 660 psi/100 CF |
| | | | (5.57 MPa) | (7.03 MPa) | (6.39 MPa) | (4.55 MPa) |
| E | C | Condition 1 | na | 777 psi/100 CF | 616 psi/100 CF | Na |
| | | | | (5.36 MPa) | (4.25 MPa) | |
| | | Condition 2 | | 1038 psi/100 CF | 776 psi/100 CF | |
| | | | | (7.16 MPa) | (5.35 MPa) | |
| E | D | Condition 1 | na | 1118 psi/100 CF | 1059 psi/100 CF | na |
| | | | | (7.71 MPa) | (7.30 MPa) | |
| | | Condition 2 | | 1218 psi/100 CF | 941 psi/100 CF | |
| | | | | (8.40 MPa) | (6.49 MPa) | |
| F | G | Condition 1 | na | na | na | 1051 psi/100 CF |
| | | | | | | (7.25 MPa) |
| | | Condition 2 | | | | 569 psi/100 CF |
| | | | | | | (3.92 MPa) |

| | | | | | | |
|---|---|---|---|---|---|---|
| *not within the scope of the claims | | | | | | |

### Control Examples 18-19 (not within the scope of the claims)

Two adhesive beads from each of Examples 14 and 15 were applied to polyvinyl chloride (PVC) based substrates which were cleaned first with isopropanol and then primed with Betaseal^{®} 43555 primer. Quick Knife Adhesion tests were performed on the samples. One set of samples were tested for Quick Knife adhesion after 3 days initial cure at 23°C and 50% relative humidity (RH). A second set of samples were tested for Quick Knife adhesion after 3 days initial cure at 23°C and 50% RH and then 14 days humidity exposure to 100°F (38°C) at 100% RH. The Quick Knife adhesion results are compiled in Table 7.

**Table 7**

| Example | 18 | 19 |
|---|---|---|
| Adhesive | Example 15 | Example 16 |
| Initial 3 Day CT Room | 100 CF | 100 CF |
| 3 Day Initial + 14 d 100 °F/ 100 RH | 100 CF | 100 CF |

## Claims

1. A composition comprising a prepolymer which is the reaction product of one or more monomeric di(isocyanatophenyl)methanes with a mixture of one or more diols and one or more triols and a low molecular weight isocyanate reactive compound wherein the ratio of isocyanate to hydroxyl equivalents in the reaction mixture used to prepare the prepolymer is from 1.2 to 1.7 and the hydroxyl ratio of diol to triol in the reaction mixture is from 3:1 to 1:1 and wherein the prepolymer has an isocyanate content of 0.5 to 1.2 percent by weight, a free isocyanate monomer content of 1.0 percent by weight or less as measured by high pressure liquid chromatography.

2. A composition according to Claim 1 wherein the prepolymer further comprises a plasticizer.

3. A composition according to Claims 1 or 2 wherein the prepolymer exhibits a viscosity of 600 N-S/m² (6,000 centipoise) to 2000 N-S/m² (20,000 centipoise) at 25 °C.

4. A composition according to any one of Claims 1 to 3 wherein the low molecular weight isocyanate reactive compound is monofunctional.

5. A composition comprising a prepolymer according to any of Claims 1 to 4 and a catalyst for the reaction of isocyanate with an active hydrogen containing compound, wherein the composition is useful as an adhesive.

6. A composition according to Claim 4 or 5 wherein the amount of low molecular weight isocyanate reactive compound used to prepare the prepolymer is from 0.4 to 3 percent by weight.

7. A process for preparing a prepolymer according to Claim 1 which comprises
reacting one or more monomeric di(isocyanatophenyl)methanes with a mixture of one or more diols and one or more triols and a low molecular weight isocyanate reactive compound in the presence of a standard polyurethane catalyst, wherein the ratio of isocyanate to hydroxyl equivalents in the reaction mixture is from 1.2 to 1.7 and the hydroxyl ratio of diol to triol in the reaction mixture is from 3:1 to 1:1 under conditions such that the prepolymer recovered from the reaction has an isocyanate content of 0.5 to 1.2 percent by weight, a free isocyanate monomer content of 1.0 percent by weight or less as measured by high pressure liquid chromatography.

8. A process according to Claim 7 wherein the prepolymer exhibits a viscosity of 600 N-S/m² (6,000 centipoise) to 2000 N-S/m² (20,000 centipoise) at 25 °C.

9. A process according to Claim 7 or 8 wherein the low molecular weight isocyanate reactive compound is monofunctional.

10. A process according to any one of Claims 7 to 9 wherein the amount of low molecular weight isocyanate reactive compound used to prepare the prepolymer is from 0.4 to 3 percent by weight.

11. A method of bonding two or more substrates together which comprises applying a composition according to Claim 6 or prepared according to any one of Claims 7 to 10 to at least one substrate, contacting the two or more substrates together with the composition disposed between the substrates; and exposing the contacted substrates to conditions under which the composition cures.

12. The method of Claim 11 wherein one or more of the surfaces is contacted with an isocyanate free primer before contacting the substrate with composition or is contacting the adhesive directly without any primer.

13. A system for bonding two or more substrates together which comprises an isocyanate free primer and a composition according to Claim 6 or prepared according to any one of Claims 7 to 10.

14. A system for bonding glass into a vehicle which comprises:
a) an isocyanate free glass primer;
b) optionally a composition comprising a hydrocarbyl substituted aromatic sulfonic acid and a solvent,
c) a composition according to Claim 6 or prepared according to any one of Claims 7 to 10.

15. A method comprising:
a) contacting an isocyanate free glass primer with a portion of a glass window to be installed in a vehicle which comes into contact with a flange of the vehicle,
b) optionally contacting a composition comprising a hydrocarbyl substituted aromatic sulfonic acid and solvent with the flange of the vehicle,
c) applying a composition according to Claim 6 or prepared according to any one of Claims 7 to 10 to the flange or the portion of the glass window which will come in contact with the flange;
d) placing the window into the vehicle such that the adhesive is disposed between the glass and the flange, and
e) allowing the adhesive to cure.

## Patentansprüche

1. Eine Zusammensetzung, beinhaltend ein Präpolymer, welches das Reaktionsprodukt von einem oder mehreren monomeren Di(isocyanatophenyl)methanen mit einer Mischung von einem oder mehreren Diolen und einem oder mehreren Triolen und einer niedermolekularen isocyanatreaktiven Verbindung ist, wobei das Verhältnis von Isocyanat- zu Hydroxyläquivalenten in der Reaktionsmischung, das für die Herstellung des Präpolymers verwendet wird, 1,2 bis 1,7 beträgt und das Hydroxylverhältnis von Diol zu Triol in der Reaktionsmischung 3 : 1 bis 1 : 1 beträgt, und wobei das Präpolymer einen Isocyanatgehalt von 0,5 bis 1,2 Gewichtsprozent, einen Gehalt an freiem Isocyanatmonomer von 1,0 Gewichtsprozent oder weniger, wie mittels Hochdruckflüssigkeitschromatographie gemessen, aufweist.

2. Zusammensetzung gemäß Anspruch 1, wobei das Präpolymer ferner einen Weichmacher beinhaltet.

3. Zusammensetzung gemäß Anspruch 1 oder 2, wobei das Präpolymer bei 25 °C eine Viskosität von 600 N-S/m² (6 000 Zentipoise) bis 2 000 N-S/m² (20 000 Zentipoise) zeigt.

4. Zusammensetzung gemäß einem der Ansprüche 1 bis 3, wobei die niedermolekulare isocyanatreaktive Verbindung monofunktionell ist.

5. Zusammensetzung, beinhaltend ein Präpolymer gemäß einem der Ansprüche 1 bis 4 und einen Katalysator für die Reaktion von Isocyanat mit einer aktiven Wasserstoff enthaltenden Verbindung, wobei die Zusammensetzung als Haftmittel nützlich ist.

6. Zusammensetzung gemäß Anspruch 4 oder 5, wobei die Menge an niedermolekularer isocyanatreaktiver Verbindung, die zum Herstellen des Präpolymers verwendet wird, 0,4 bis 3 Gewichtsprozent beträgt.

7. Ein Prozess zum Herstellen eines Präpolymers gemäß Anspruch 1, der Folgendes beinhaltet:
Reagierenlassen von einem oder mehreren monomeren Di(isocyanatophenyl)methanen mit einer Mischung von einem oder mehreren Diolen und einem oder mehreren Triolen und einer niedermolekularen isocyanatreaktiven Verbindung in Gegenwart eines Standardpolyurethankatalysators, wobei das Verhältnis von Isocyanat- zu Hydroxyläquivalenten in der Reaktionsmischung 1,2 bis 1,7 beträgt und das Hydroxylverhältnis von Diol zu Triol in der Reaktionsmischung 3 : 1 bis 1 : 1 beträgt, unter derartigen Bedingungen, dass das aus der Reaktion gewonnene Präpolymer einen Isocyanatgehalt von 0,5 bis 1,2 Gewichtsprozent, einen Gehalt an freiem Isocyanatmonomer von 1,0 Gewichtsprozent oder weniger, wie mittels Hochdruckflüssigkeitschromatographie gemessen, aufweist.

8. Prozess gemäß Anspruch 7, wobei das Präpolymer bei 25 °C eine Viskosität von 600 N-S/m² (6 000 Zentipoise) bis 2 000 N-S/m² (20 000 Zentipoise) zeigt.

9. Prozess gemäß Anspruch 7 oder 8, wobei die niedermolekulare isocyanatreaktive Verbindung monofunktionell ist.

10. Prozess gemäß einem der Ansprüche 7 bis 9, wobei die Menge an niedermolekularer isocyanatreaktiver Verbindung, die zum Herstellen des Präpolymers verwendet wird, 0,4 bis 3 Gewichtsprozent beträgt.

11. Ein Verfahren zum Verbinden zweier oder mehrerer Substrate miteinander, beinhaltend das Anwenden einer Zusammensetzung gemäß Anspruch 6 oder hergestellt gemäß einem der Ansprüche 7 bis 10 auf mindestens ein Substrat, das Miteinander-in-Kontakt-Bringen der zwei oder mehreren Substrate mit der zwischen den Substraten angeordneten Zusammensetzung; und das Aussetzen der in Kontakt gebrachten Substrate gegenüber Bedingungen, unter denen die Zusammensetzung härtet.

12. Zusammensetzung gemäß Anspruch 11, wobei eine oder mehrere der Oberflächen mit einem isocyanatfreien Primer in Kontakt gebracht werden, bevor das Substrat mit der Zusammensetzung in Kontakt gebracht wird, oder das Haftmittel direkt ohne einen Primer kontaktieren.

13. Ein System zum Verbinden zweier oder mehrerer Substrate miteinander, beinhaltend einen isocyanatfreien Primer und eine Zusammensetzung gemäß Anspruch 6 oder hergestellt gemäß einem der Ansprüche 7 bis 10.

14. Ein System zum Verbinden von Glas in einem Fahrzeug, beinhaltend:
a) einen isocyanatfreien Glasprimer;
b) optional eine Zusammensetzung, beinhaltend eine hydrocarbylsubstituierte aromatische Sulfonsäure und ein Lösungsmittel,
c) eine Zusammensetzung gemäß Anspruch 6 oder hergestellt gemäß einem der Ansprüche 7 bis 10.

15. Ein Verfahren, das Folgendes beinhaltet:
a) In-Kontakt-Bringen eines isocyanatfreien Glasprimers mit einem Teil eines Glasfensters, welches in ein Fahrzeug installiert werden soll, der mit einem Flansch des Fahrzeugs in Kontakt kommt,
b) optional In-Kontakt-Bringen einer Zusammensetzung, beinhaltend eine hydrocarbylsubstituierte aromatische Sulfonsäure und Lösungsmittel, mit dem Flansch des Fahrzeugs,
c) Anwenden einer Zusammensetzung gemäß Anspruch 6 oder hergestellt gemäß einem der Ansprüche 7 bis 10 auf den Flansch oder den Teil des Glasfensters, welcher mit dem Flansch in Kontakt kommen wird;
d) Platzieren des Fensters in das Fahrzeug, so dass das Haftmittel zwischen dem Glas und dem Flansch angeordnet ist, und
e) Härtenlassen des Haftmittels.

## Revendications

1. Une composition comprenant un prépolymère qui est le produit réactionnel d'un ou de plusieurs di(isocyanatophényl)méthanes monomères avec un mélange d'un ou de plusieurs diols et d'un ou de plusieurs triols et un composé de faible masse moléculaire réactif aux isocyanates, le rapport de l'isocyanate aux équivalents hydroxyle dans le mélange réactionnel utilisé pour préparer le prépolymère allant de 1,2 à 1,7 et le rapport hydroxyle du diol au triol dans le mélange réactionnel allant de 3/1 à 1/1, et le prépolymère ayant une teneur en isocyanate de 0,5 à 1,2 pour cent en poids, une teneur en monomère isocyanate libre de 1,0 pour cent en poids ou moins tel que mesuré par chromatographie en phase liquide à pression élevée.

2. Une composition selon la revendication 1 dans laquelle le prépolymère comprend en outre un plastifiant.

3. Une composition selon les revendications 1 ou 2 dans laquelle le prépolymère présente une viscosité de 600 N-S/m² (6 000 centipoises) à 2 000 N-S/m² (20 000 centipoises) à 25 °C.

4. Une composition selon n'importe laquelle des revendications 1 à 3 dans laquelle le composé de faible masse moléculaire réactif aux isocyanates est monofonctionnel.

5. Une composition comprenant un prépolymère selon n'importe lesquelles des revendications 1 à 4 et un catalyseur pour la réaction d'isocyanate avec un composé contenant un hydrogène actif, la composition étant utile en tant qu'adhésif.

6. Une composition selon la revendication 4 ou la revendication 5 dans laquelle la quantité de composé de faible masse moléculaire réactif aux isocyanates utilisé pour préparer le prépolymère va de 0,4 à 3 pour cent en poids.

7. Un procédé pour préparer un prépolymère selon la revendication 1 qui comprend la réaction d'un ou de plusieurs di(isocyanatophényl)méthanes monomères avec un mélange d'un ou de plusieurs diols et d'un ou de plusieurs triols et un composé de faible masse moléculaire réactif aux isocyanates en présence d'un catalyseur polyuréthane standard, dans lequel le rapport de l'isocyanate aux équivalents hydroxyle dans le mélange réactionnel va de 1,2 à 1,7 et le rapport hydroxyle du diol au triol dans le mélange réactionnel va de 3/1 à 1/1 dans des conditions telles que le prépolymère récupéré de la réaction a une teneur en isocyanate de 0,5 à 1,2 pour cent en poids, une teneur en monomère isocyanate libre de 1,0 pour cent en poids ou moins tel que mesuré par chromatographie en phase liquide à pression élevée.

8. Un procédé selon la revendication 7 dans lequel le prépolymère présente une viscosité de 600 N-S/m² (6 000 centipoises) à 2 000 N-S/m² (20 000 centipoises) à 25 °C.

9. Un procédé selon la revendication 7 ou la revendication 8 dans lequel le composé de faible masse moléculaire réactif aux isocyanates est monofonctionnel.

10. Un procédé selon n'importe laquelle des revendications 7 à 9 dans lequel la quantité de composé de faible masse moléculaire réactif aux isocyanates utilisé pour préparer le prépolymère va de 0,4 à 3 pour cent en poids.

11. Une méthode pour lier deux substrats ou plus ensemble, laquelle comprend l'application d'une composition selon la revendication 6 ou préparée selon n'importe laquelle des revendications 7 à 10 sur au moins un substrat, la mise en contact des deux substrats ou plus ensemble, la composition étant disposée entres les substrats ; et l'exposition des substrats mis en contact à des conditions dans lesquelles la composition durcit.

12. La méthode de la revendication 11 dans laquelle une ou plusieurs des surfaces sont mises en contact avec un apprêt dépourvu d'isocyanate avant la mise en contact du substrat avec une composition ou sont en contact avec l'adhésif directement sans apprêt quel qu'il soit.

13. Un système pour lier deux substrats ou plus ensemble, lequel comprend un apprêt dépourvu d'isocyanate et une composition selon la revendication 6 ou préparée selon n'importe laquelle des revendications 7 à 10.

14. Un système pour lier du verre dans un véhicule, lequel comprend :
a) un apprêt pour verre dépourvu d'isocyanate ;
b) facultativement une composition comprenant un acide sulfonique aromatique substitué hydrocarbyle et un solvant,
c) une composition selon la revendication 6 ou préparée selon n'importe laquelle des revendications 7 à 10.

15. Une méthode comprenant:
a) la mise en contact d'un apprêt dépourvu d'isocyanate avec une partie d'une fenêtre en verre à installer dans un véhicule, laquelle vient en contact avec un rebord du véhicule,
b) facultativement la mise en contact d'une composition comprenant un acide sulfonique aromatique substitué hydrocarbyle et un solvant avec le rebord du véhicule,
c) l'application d'une composition selon la revendication 6 ou préparée selon n'importe laquelle des revendications 7 à 10 sur le rebord ou la partie de la fenêtre en verre qui viendra en contact avec le rebord ;
d) le placement de la fenêtre au sein du véhicule de telle sorte que l'adhésif soit disposé entre le verre et le rebord, et
e) le fait de permettre à l'adhésif de durcir.
